Europäisches Patentamt

European Patent Office

Office européen des brevets

(19)

(11) Publication number: **0 301 924 B1**

# EUROPEAN PATENT SPECIFICATION

(12)

(45) Date of publication of patent specification: **26.08.92**

(51) Int. Cl.⁵: **C02F 3/08**, C02F 3/30, C02F 1/52

(21) Application number: **88400921.8**

(22) Date of filing: **15.04.88**

The file contains technical information submitted after the application was filed and not included in this specification

(54) **Waste water treating process.**

(30) Priority: **31.07.87 JP 192242/87**

(43) Date of publication of application:
**01.02.89 Bulletin 89/05**

(45) Publication of the grant of the patent:
**26.08.92 Bulletin 92/35**

(84) Designated Contracting States:
**CH DE FR GB LI NL SE**

(56) References cited:
**EP-A- 0 203 549
DE-A- 3 001 929**

**G.W.F. WASSER-ABWASSER, vol. 123, no. 5, May 1982, pages 255-259; P. WOLF et al.: "Vergleichende Untersuchungen mit Kalk- und Eisen-Vorfällung an einer Tropfkör- peranlage"**

(73) Proprietor: **Nishihara Environmental Sanita- tion Research Corp. Ltd.
6-18, Shibaura 3-chome
Minato-ku Tokyo(JP)**

(72) Inventor: **Takeshi Nishiguchi§ Vil- lahigashiyama 3-B,592-1
Nushiya-machi§ Nanajoagaru§
Daikokumachi-dori
Higashiyama-ku§ Kyoto-shi§ Kyoto-fu(JP)**

(74) Representative: **CABINET BONNET-THIRION
95 Boulevard Beaumarchais
F-75003 Paris(FR)**

**Description**

FIELD OF THE INVENTION

The present invention relates to a process of treating waste water of the activated sludge or biofilter type. Furthermore, the present invention relates to processes of treating waste water of the activated sludge type including a conventional activated sludge process, an extended aeration process, an intermittent cyclic aeration process, a lagoon process, an oxidation ditch process and the like, and to processes of treating waste water of the biofilter type including a contact aeration process, a rotating biological contactor process, a fluidized bed process and the like wherein dephosphorization, i.e. removal of phosphorus is performed, and more particularly to the waste water treatment process of the activated sludge type or biofilter type wherein phosphorus in the waste water is removed or phosphorus and nitrogen in the waste water are removed in the presence of iron ions.

BACKGROUND OF THE INVENTION

Recently, as one of countermeasures against the eutrophication of lakes, ponds and the like, it has become necessary to remove from the waste water phosphoric acids such as polyphosphoric acid, orthophosphoric acid, methaphosphoric acid, pyrophosphoric acid and the like or salts thereof, and nitrogen.

To that end for the dephosphorization, there have been practised a coagulation and sedimentations process, a biological dephosphorization process, a crystallization-dephosphorization process, and the like, and, for the denitrification, in general, a biological denitrification process has been widely practised.

In the case of the coagulation and sedimentation process, stability in the treatment of dephosphorization can be obtained, however, it is difficult to feed a coagulant at a suitable flow rate, whereby a large quantity of the coagulant is needed. Consequently, problems have arisen including high running costs, troublesome operating controls, and further, increased production of sludge and worsened dewaterability.

In the case of the biological dephosphorization process of the activated sludge type or the biofilter type, the process is seemingly economical. However, when the conditions are varied due to fluctuations in the flow rate of the waste water and the like, the dephosphorization is not effectively performed. Furthermore, in order to perform the final dephosphorization, as a measure to prevent phosphorus excessively taken in by the microorganisms from being released again from the excess sludge, chemically coagulated dephosphorization is performed, whereby the treatment process becomes complicated, thus proving to be an uneconomical process. Furthermore, when the denitrification treatment is combined therewith, the problem has arisen that the dephosphorization rate is adversely affected by the conditions of the denitrification treatment, whereby the dephosphorization treatment becomes instable and so forth.

In the case of the crystallization-dephosphorization process many conditions such as decarbonation and pH control are required for the effective treatment, and problems have arisen such as the cost of pretreatment and much labor needed for complicated operations.

The present invention seeks to avoid the problems associated with known dephosphorization, or dephosphorization and denitrification when performed in waste water treatment processes of the activated sludge type including the conventional activated sludge process, the extended aeration process, the intermittent cyclic aeration process, the lagoon process, the oxidation ditch process and the like, and in waste water treatment processes of the biofilter type including the rotating biological contactor process, the contact aeration process, the fluidized bed process and the like.

EP-A-0 203 549, corresponding to the preamble of claim 1, discloses a waste water treatment process for removing phosphorus and nitrogen from waste water including phosphate ions. Waste water is introduced into a treatment tank containing activated sludge and an iron contactor or contactors are immersed in the waste water. The treatment tank is operated successively under anaerobic conditions during which the waste water is agitated and aerobic conditions during which the waste water is aerated. Iron ions are caused to elute from the contactor or contactors and will react with phosphate ions to form insoluble iron phosphates.

SUMMARY OF THE INVENTION

An object of the present invention is to provide a waster water treatment process such as of the activated sludge type or the biofilter type, wherein stability of an electromechanical dephosphorization process and economics of a biochemical dephosphorization process are combined together, effective dephosphorization can be performed by electrochemical and biochemical reactions, and stable denitrification can be performed simultaneously with dephosphorization.

A more particular object of the invention consists in improving the performance of such known waste water treatment processes through enhanced elution of the iron contactor or contactors.

More specifically, the present invention features a waste water treatment process for removing phosphorus and optionally nitrogen, from waste water, of the activated sludge type or biofilter type, operating under aerobic conditions and then under anaerobic conditions in a treatment tank containing waste water including phosphate ions, activated sludge including bacteria and iron contactor or contactors immersed in the waste water, corrosion being effected to elute iron ions from the iron contactor or contactors, eluted iron ions reacting with phosphate ions to form insoluble iron phosphates, characterized in that the process comprises the steps of:

- adding acclimatized sulfate reducing bacteria to activated sludge,
- maintaining the ratio of the phosphorus load per day in the waste water to the total surface area of the iron contactor or contactors in the range of 0.3 to 1.0 g/m2/day,
- causing an agitating stream of the waste water to flow over the surface of the iron contactor or contactors at a velocity of 10 to 20 cm/sec,
- operating the treatment tank under aerobic conditions while maintaining dissolved oxygen contentration from 1 to 3.2 mg/l and maintaining the oxidation-reduction potential of the resulting oxygen concentration cell within the range of -200 to -400 mV, and thereby effecting electrochemical corrosion of the iron and the elution of iron ions from the iron contactor or contactors, and then
- operating the treatment tank under anaerobic conditions, thus maintaining the dissolved oxygen concentration at 0 mg/l in the tank, and causing $10^5$ to $10^6$ cells/ml of sulfate reducing bacteria to effect microorganism corrosion of the surface of the iron contactor or contactors and thereby the elution of iron ions from the iron contactor or contactors, and
- allowing iron ions eluted under both aerobic and anaerobic conditions to react with phosphoric acid ions present in the waste water to produce an insoluble compound or compounds of iron and phosphate ions.

According to a preferred feature of the present invention, the iron contactor or contactors immersed in the treatment tank, may be formed of iron plate members, iron granular members, iron net members, iron tube members, iron bar members, iron disc members and the like. Elution of the iron ions is proportional to the surface area of the iron contactor or contactors. It is preferable to use a contactor having a contact surface area as large as possible.

Further, when employing activated sludge process the iron contactor or contactors are immersed at a location where the dissolved oxygen concentration is in the range of 1 to 3.2 mg/l. When employing biofilters type process, since a multiple stage system is normally adopted, it is preferable to immerse the contactor or contactors in a first tank or the like where the dissolved oxygen concentration is in a range of 1 to 2.5 mg/l.

According to the present invention, the iron contactor or contactors are immersed in a region where the condition of iron corrosion becomes optimal, and the dissolved oxygen concentration and the oxidation reduction potential are determined, avoiding the passivation of the iron. Hence, under the aerobic conditions, as conditions for iron ion elution by the corrosion, the oxygen concentration dissolved by aeration is maintained at 1 to 3.2 mg/l and the oxidation reduction potential of the oxygen-concentration cells is set at -200 to -400 mV. When the conditions are out of these ranges the iron is subject to passivation, that is coatings of iron oxide are, disadvantageously, formed on the contactor or contactors whereby the elution of iron ions is markedly decreased. Under the anaerobic conditions, the sulfate reducing bacteria, which are made to present with the activated sludge or the biofilters, are actively utilized. Under the anaerobic conditions, the sulfate reducing bacteria of $10^5$ to $10^6$ cells/ml are present, so that the iron ions can be made to elute by the microorganism-corrosion.

Here, the load of phosphorus to the surface area of the iron contactor or contactors is maintained within a range of 0.3 to 1.0 g/m$^2$/day, so that phosphorus can be effectively removed.

To facilitate the elution of the iron ions by the corrosion of the iron, the sulfate reducing bacteria having a concentration higher than the original concentration in the activated sludge or the biofilters, preferably $10^5$ to $10^6$ cells/ml for example, are made-to coexist with the iron contactor or contactors, the activated sludge, and or the biofilters.

For this purpose, the sulfate reducing bacteria are preferably acclimatized to a full extent. For example, since a large quantity of the sulfate reducing bacteria exist in the soil of paddy fields or the like, in the first step of the process it is preferable to mix the bacteria into the treatment tank to acclimatize them.

If the agitating flow velocity on the outer surfaces of the iron contactor or contactors is not proper, chemical compounds namely salts, such as ferric phosphate and calcium phosphate crystallize on the outer

EP 0 301 924 B1

surfaces of the iron contactor or contactors to form coating films, and the elution of the iron ions is impeded. Hence, the agitating flow velocity on the outer surfaces of the iron contactor or contactors is set at 10 to 20 cm/sec, whereby the iron ions easily elute, and the iron ions and ions of phosphoric acid in the waste water quickly react with each other to facilitate the production of an insoluble salt, namely iron phosphate.

The range of concentration of the suspended solids in the mixed liquor in the treatment tank of the activated sludge type process is preferably in the range of 3000 to 6000 mg/l. In cases outside this range, it is necessary to regulate the system such that the suspended solids in the mixed liquor are eliminated as the excess biological sludge and the concentration of the suspended solids in the mixed liquor is returned to the preferred range.

According to the present invention, while the iron contactor or contactors immersed in the treatment tank and the sulfate reducing bacteria are made to coexist with each other and the agitating flow velocity is set within the range of 10 to 20 cm/sec, under the optimal corrosion conditions of the iron contactor or contactors, elution of the iron ions suitable for the reaction is performed by electro-chemical corrosion through the agency of the oxygen concentration cells under the aerobic conditions and by the microorganism corrosion under the anaerobic conditions. The iron ions and the ions of phosphoric acid in the waste water react with each other to form an amorphous material or salt, namely ferric phosphate, which settles with the sludge, whereby effecting dephosphorization of the waste water.

Particularly, in the biofilter type process such as the rotating biological contactor process, the contact aeration process and the fluidized bed process, the biofilters on the outer surfaces of the iron contactor or contactors immersed in the first tank or the like are thin, and iron ions are made to elute by the electro-chemical corrosion phenomenon through the agency of the oxygen concentration cells under the aerobic treatment. When the biofilters become thick, the biofilters on the outer surfaces of the iron contactor or contactors are under anaerobic conditions, the microorganism corrosion caused by the sulfate reducing bacteria occurs on the outer surfaces of the iron contactor or contactors and iron ions are made to elute.

In this case, and with a concentration of sulfate reducing bacteria in the range of $10^5$ to $10^6$ cells/ml, three times or more iron ions elute compared with the case where sulfate reducing bacteria are not present.

The iron ions which elute as described above combine with the ions of phosphoric acid in the waste water which flows into the treatment tank to form an insoluble salt, namely ferric phosphate, that is taken into the sludge. Hence, when employing the activated sludge type process cohesiveness of the sludge is raised, and, when employing biofilter type process, cohesiveness of the sloughed off biofilm is raised, whereby the settlability of the sludge is improved. Accordingly, the concentration of the suspended solids in the mixed liquor in the treatment tank can be raised as compared with a conventional biological treatment process, and the capacity of absorbing fluctuations in the influent is high, so that a stable treatment can be maintained.

Furthermore, as for the elution of the iron ions, in cases where the aerobic step and a anaerobic step are repeated, whereby dephosphorization and nitrification-denitrification are performed at the same time as in the intermittent cyclic aeration process, the iron ions eluting into the waste water control alkalinity, and hold pH within the optimal range of nitrification-denitrification, whereby nitrification-denitrification can be facilitated, so that, not only dephosphorization but also denitrification can be improved to a considerable extent.

An iron contactor or contactors are immersed in a treatment tank, sulfate reducing bacteria are present, and the velocity of flow of the agitating stream is caused to flow over the outer surfaces of the iron contactor or contactors, the concentration of dissolved oxygen or the oxidation-reduction potential is controlled to maintain the optimal iron corroding condition, and iron ions are caused to elute into the mixed liquor in the treatment tank, under the aerobic treatment, by electrochemical corrosion through the agency of oxygen concentration cells, and under the anaerobic treatment, by microorganism corrosion by the sulfate reducing bacteria, so that ions of phosphoric acid in the waste water are combined with the eluting iron ions to form an amorphous material of an insoluble salt, namely iron phosphate, which does not easily elute again. Because of this, in contrast to the dephosphorization rate by conventional activated sludge type processes or biofilter type processes from 0 to 30%, 80 to 95% can be achieved by the waste water treatment processes according to the present invention. The dephosphorization rate is improved to a considerable extent, so that a remarkable difference in results is obtained. Particularly, even if the excess sludge is maintained under the anaerobic conditions phosphorus does not elute from the excess activated sludge unlike in the treatment system by conventional biological dephosphorization processes. Problems caused by conventional processes are solved, so that stable and highly efficient dephosphorization effects can be achieved.

Furthermore, since the agitating flow of waste water over the outer surface of the iron contactor or

4

contractors is effected within the range of 10 to 20 cm/sec, corrosion on the outer surfaces of the iron contactor or contactors is facilitated, elution of the iron ions is furthered and opportunities for the iron ions to combine with the ions of phosphoric acid in the waste water are increased. Hence, effective reactions produce an insoluble salt, namely iron phosphate, so that the dephosphorization rate can be remarkably high and stabilized.

Further, in order to perform dephosphorization in the waste water by use of an iron salt according to an ordinary coagulation and sedimentation process, it is necessary to use 3 to 5 times the theoretically necessary value. However, according to the present invention, under the controlled optimal conditions, the iron ions are made to elute by corrosion, and, immediately and effectively made to react with the ions of phosphoric acid in the waste water. The resulting advantages are the amount of the iron ions necessary is the substantially theoretical value, the operation is economical and the operation is easy, and concentratability of the sludge is satisfactory, whereby the quantity of the excess sludge is decreased.

Since, with the excess sludge produced according to the present invention, elution of phosphorus and the like do not easily occur again, the content of phosphorus in the excess sludge produced according to the present invention is 3.0% or above in contrast to the content of phosphorus in the excess sludge according to conventional processes, for example, in the dried sludge, 1.0 to 1.5%. Hence when utilized in the agricultural industry, the present invention can provide an excellent sludge fertilizer having a high-phosphorus content.

Furthermore, with the waste water treatment system according to conventional activated sludge type processes and biofilter type processes, the technique of operational control in accordance with the variation in the influent condition is difficult to apply, whereby the dephosphorization rate fluctuates and it is difficult to ensure a stable dephosphorization rate. However, according to the present invention, the dephosphorization treatment can be reliably performed by operation within the optimal range.

According to the waste water treatment process of the present invention, the operation is performed at a lower concentration of dissolved oxygen in the treatment tank than that of conventional processes, so that energy-saving can be expected. Additionally, with the present waste water treatment process both dephosphorization and denitrification can be obtained under the aerobic conditions and the anaerobic conditions as aforesaid.

BRIEF DESCRIPTION OF THE DRAWINGS

One example of the specific forms of the present invention will hereunder be described with reference to the accompanying drawings. However, the present invention need not necessarily be limited to the following description and examples

Fig. 1 is a schematic drawing showing the waste water treatment system employing activated sludge in the extended aeration process according to one embodiment of the present invention.

Fig. 2 is a schematic drawing showing the waste water treatment system employing biofilters with rotating biological contactors, according to another embodiment.

Fig. 3 is a schematic drawing showing the waste water treatment system for an intermittent cyclic aeration process according to a further embodiment.

Fig. 4 is a diagram showing various steps of the waste water treatment system wherein denitrification and dephosphorization are simultaneously performed in accordance with the embodiment of Fig. 3.

Fig. 5 is a graph showing the relationship between the load of phosphorus to the surface area of the flat steel plate contactor or contactors and the dephosphorization rate.

DESCRIPTION OF THE PREFERRED EMBODIMENTS

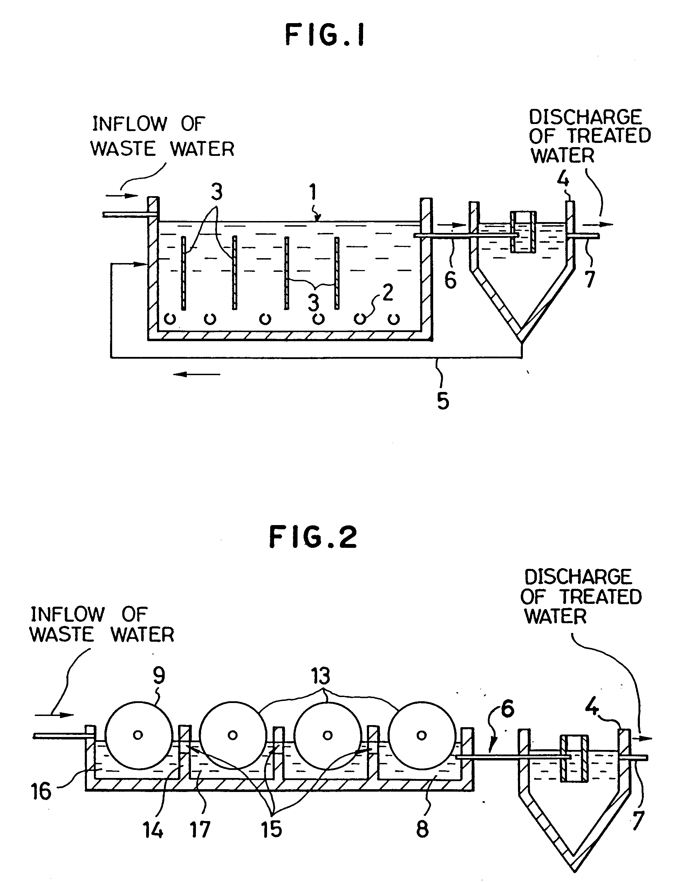

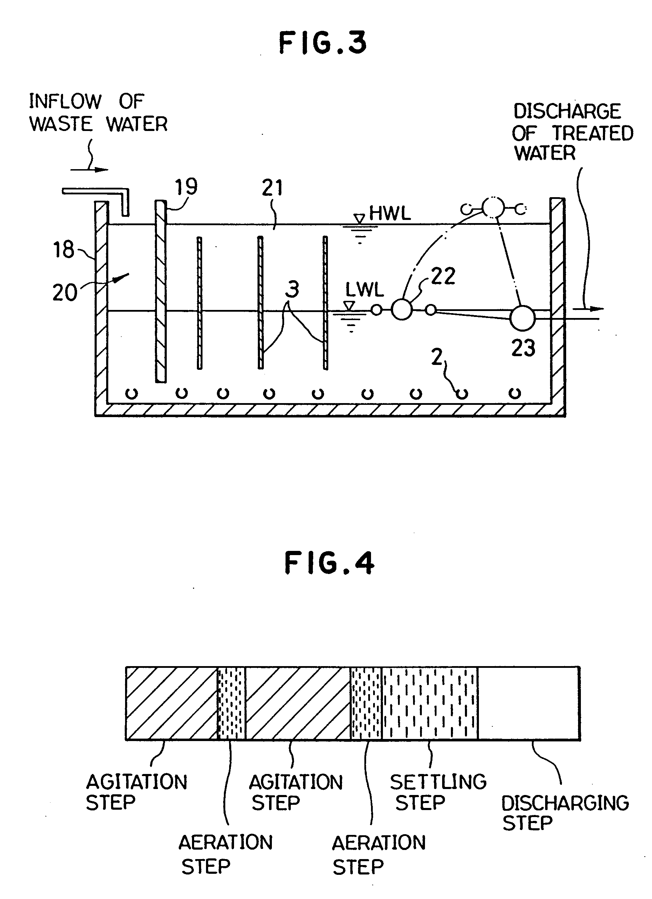

In Fig. 1, reference numeral 1 is a treatment tank of a conventional type for holding the activated sludge containing $10^5$ cells /ml of sulfate reducing bacteria. Reference numeral 2 is an aeration device provided at an inner bottom portion of the treatment tank 1 for blowing air into the treatment tank. The aeration device 2 is more particularly a jet aeration/agitation device of the type also described in respect of the embodiment of Fig.3. The jet aeration/agitation device blows a gas-liquid mixed liquor of waste water and sludge for aerating and also agitating the same. Further, the aeration/agitation device performs agitation of the mixed liqud (without the addition of air) for the agitation step under anaerobic conditions. A plurality of flat steel plate contactors 3 are immersed in the treatment tank at suitable intervals. As indicated above, the velocity of the stream of waste water over the iron contactors 3 during treatment tank operation is maintained in the range 10 to 20 cm/sec. Reference numeral 4 is a settling tank for solid-liquid separation of mixed liquor from the treatment tank 1. Reference numeral 5 is a sludge return pipe for returning the settled sludge to the settling tank 4 at an inlet portion of the treatment tank 1. Reference numeral 6 is a transfer pipe for transferring the mixed liquor in the treatment tank 1 to the settling tank, and 7 is a discharge pipe for discharging supernatant liquid from the settling tank.

Removed from the waste water, which has flowed into the treatment tank 1, are phosphorus, BOD, COD and SS (suspended solids) in a unit combining the treatment tank 1 and the settling tank 4. In the settling tank 4, the mixed liquor is settled and separates into supernatant liquid and sludge, and the supernatant liquid is discharged via the discharge pipe 7. The sludge settled and separated in the settling tank 4 is returned to the treatment tank 1, and part of the sludge is suitably extracted from the system as excess sludge, whereby the concentration of the suspended solids in the mixed liquor in the treatment tank 1 is maintained at the desired level.

Comparative experiments on the dephosphorization were conducted by use of the treatment unit employing activated sludge in the extended aeration process according to this first embodiment of the present invention.

When the suspended solids concentration in the mixed liquor is held at 3400 mg/l, the dissolved oxygen concentration at 2.0 mg/l and the oxidation-reduction potential of the oxygen concentration cells at -240 mV, but without the flat steel plate contactors, the dephosphorization rate is 0 to 8%. On the other hand, when the flat steel plate contactors were immersed in the treatment tank having a phosphorus load/contactor surface area ratio in the range 0.3 to 1 g/m2/day in the treatment tank the dephosphorization rate is 95%, cohesiveness of the activated sludge is improved, the removal rates of BOD, COD and SS are considerably raised and the transparency reaches 50° or thereabove, thus achieving satisfactory results. In the extended aeration process, if the flat steel plate contactors are not immersed for use as in this example, then, the satisfactory dephosphorization rate cannot be obtained and remarkable improvements in the treated water quality cannot be obtained.

In Fig. 2, designated at 8 is a rotating biological contactor treatment tank, at 9 are steel rotating biological contactors immersed in the treatment tank 8 containing activated sludge including $10^5$ cells/ml of acclimatized sulfate reducing bacteria. At 4 is a settling tank, at 6 is a transfer pipe for transferring the mixed liquor from the rotating biological contactor treatment tank 8 to the settling tank 4, at 7 is a discharge pipe for discharging the supernatant liquid into the settling tank 4, at 13 are plastics contactors immersed in the rotating biological contactor treatment tank 8, at 14 are partition walls of the rotating biological contactor treatment tank 8, and at 15 are communicating holes formed in the partition walls 14. Removed from the waste water, which has flowed into the rotating biological contactor treatment tank 8, are phosphorus, BOD, COD and SS in an unit combining the rotating biological contactor treatment tank 8 and the settling tank 4. In the settling tank 4, the mixed liquor settles and separates into supernatent liquid and sludge, and the supernatant liquid is discharged by the discharge pipe 7.

In this embodiment of the present invention, with the treatment unit employing biofilters, in the rotating biological contactor process, when the concentration of phosphorus in the influent water was 4 to 16.9 mg/l, dephosphorization rates of 90% or above were obtained and the concentration of phosphorus in the treated water was constantly 1 mg/l or below. At this time, the surface area of the steel rotating biological contactors, about 1/2 of the outer surfaces of which were immersed in a first tank 16 of the rotating biological contactor treatment tank 8, was set at 0.48 $m^2$ (ten sheets), the surface area of the plastics rotating biological contactors which were immersed in a second tank 17 and so forth of the rotating biological contactor treatment tank 8 was set at 1.44 $m^2$ (30 sheets) and the r.p.m.'s of the rotating biological contactors were set at 20 cycles/min. In this embodiment of the invention rotating biological contactors cause an agitating stream of waste water to flow over the surface of the contactors at a velocity of 10 to 20 cm/sec. Under these conditions, the concentration of dissolved oxygen in the first tank was 2.2 mg/l, the oxidation-reduction potential of the oxygen concentration cells -330 mV and the flow rate of the influent water 20 l/day. In this embodiment, four rotating biological contactor treatment tanks were provided about 1/2 of the surface area of the steel rotating biological contactors was immersed in the first tank at the former stage, and the plastics rotating biological contactors were immersed in the other three tanks at the latter stage. However, the number of tanks, in which the steel rotating biological contactors are immersed and the number of sheets of the contactors can be suitably increased or decreased.

Further, another waste water treatment system for working the processes according to the present invention will hereunder be described.

In Fig. 3, designated at 18 is a treatment tank for holding the activated sludge. A baffle board 19 partitions between an inlet zone 20, into which the waste water flows, and a waste water treatment zone 21. Denoted at 22 is a supernatant liquid discharge device which is vertically movably provided at the end portion on the discharge side of the treatment tank 18 through a pivot 23, and the supernatant liquid discharge device 22 is lowered together with the liquid level, while discharging the supernatant liquid during a discharging step. Designated at 2 is an aeration device like the one disclosed in the embodiment of Fig. 1. It is provided at the bottom portion of the treatment tank 18, and is adapted to blow air into the treatment tank 18. As in the embodiment of Fig. 1 the aeration device is a jet aeration/agitation device which is not easily clogged and alternately blows a gas-liquid mixed liquor into the treatment tank for the aerating step for operating the tank under aerobic conditions and blows mixed liquor, without any air, for agitating step and operating the treatment tank under anaerobic conditions. Denoted at 3 are flat steel plate contactors immersed in the treatment zone 21 in the treatment tank 18 at suitable intervals. As indicated above, the waste water is agitated so that it flows over the surface of the iron contactors at a velocity of 10 to 20 cm/sec. As shown in Fig. 3 and 4, the treatment tank 18 is operationally controlled to successively repeat the agitation step, aeration step, settling step and discharging step.

First, the waste water is made to flow into the inlet zone 20 in the treatment tank 18. Removed from the waste water which is made to flow into the treatment tank 18 are phosphorus, BOD, COD, SS and nitrogen. In the agitation step, the content of the treatment tank 18 is maintained under anaerobic conditions, while in the aeration step, air is fed by the aeration device 2 into the treatment tank 18, whereby the content of the treatment tank 18 is brought under the aerobic conditions.

Then, in the settling step, the suspended solids in the mixed liquor settle in the treatment tank 18, and, in the succeeding discharging step, the supernatant liquid is discharged via the supernatant liquid discharge device 22. Excess biological sludge is suitably extracted, so that the concentration of the suspended solids in the mixed liquor can be held at the desired level.

The experimental results as shown in the following Table 1 were obtained by the treatment system of the intermittent cyclic aeration process according to the embodiment of the present invention shown in Fig. 3. At this time, the aeration step was performed for 30 min, the setting step for one hour, and the concentration of the suspended solids in the mixed liquor was 5100 mg/l.

TABLE 1

| ITEM | (1) | (2) |
|---|---|---|
| DISSOLVED OXYGEN CONCENTRATION (mg/l) | 1.9 | 2.4 |
| OXIDATION-REDUCTION POTENTIAL(mV) | -310 | -200 |
| PHOSPHORUS (Total-phosphorus) | | |
| Influent (mg/l) | 4.24 | 3.52 |
| Effluent (mg/l) | 0.33 | 0.20 |
| NITROGEN (total nitrogen) | | |
| Influent (mg/l) | 32.5 | 40.5 |
| Effluent (mg/l) | 1.4 | 3.8 |

As shown in this Table 1, the dephosphorization rate and the denitrification rate were both 90% or above, thus achieving the outstanding treatment results. At the same time, were also obtained high removal rates of BOD, COD and SS and transparency of 100° or above.

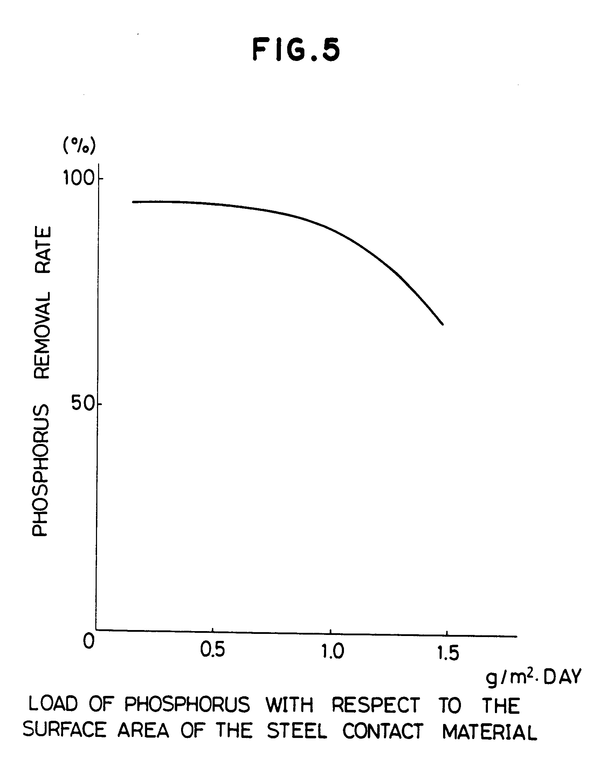

Fig. 5 shows the results of that the number of sheets of the flat steel plate contactors immersed in the treatment tank was varied and the relationship between the load of phosphorus to the surface area of the flat steel plate contactors and the dephosphorization rate was studied. It is found from this that, in order to perform the stable dephosphorization, it is necessary to hold the load of phosphorus to the surface area of the flat steel plate contactors within a range of 0.3 to 1.0 $g/m^2/day$.

Incidentally, when the load of phosphorus to the surface area of the flat steel plate contactors was in the proximity of 0.1 $g/m^2/day$, the elution value of the iron ions became excessively high, and the excessively eluting iron ions were turned into $FeO_3$, whereby sometimes, the treated water assumed a slightly yellowish color.

As the embodiments of the present invention, there have been shown the cases of the waste water treatment system of the extended aeration process, the rotating biological contactor process and the intermittent cyclic aeration process. However, in addition to the above, the present invention can be worked by the activated sludge processes including the conventional activated sludge process, the lagoon process, the oxidation ditch process and the like, and the biofilter processes such as the contact aeration process and the fluidized bed process.

7

**Claims**

1. A waste water treatment process for removing phosphorus and optionally nitrogen, from waste water, of the activated sludge type or biofilter type, operating under aerobic conditions and then under anaerobic conditions in a treatment tank containing waste water including phosphate ions, activated sludge including bacteria and an iron contactor or contactors immersed in the waste water, corrosion being effected to elute iron ions from the iron contactor or contactors, eluted iron ions reacting with phosphate ions to form insoluble iron phosphates, characterized in that the process comprises the steps of:
   - adding acclimatized sulfate reducing bacteria to activated sludge,
   - maintaining the ratio of the phosphorus load per day in the waste water to the total surface area of the iron contactor or contactors in the range of 0.3 to 1.0 g/m2/day,
   - causing an agitating stream of the waste water to flow over the surface of the iron contactor or contactors at a velocity of 10 to 20 cm/sec,
   - operating the treatment tank under aerobic conditions while maintaining dissolved oxygen contentration from 1 to 3.2 mg/l and maintaining the oxidation-reduction potential of the resulting oxygen concentration cell within the range of -200 to -400 mV, and thereby effecting electrochemical corrosion of the iron and the elution of iron ions from the iron contactor or contactors, and then
   - operating the treatment tank under anaerobic conditions, thus maintaining the dissolved oxygen concentration at 0 mg/l in the tank, and causing $10^5$ to $10^6$ cells/ml of sulfate reducing bacteria to effect microorganism corrosion of the surface of the iron contactor or contactors and thereby the elution of iron ions from the iron contactor or contactors, and
   - allowing iron ions eluted under both aerobic and anaerobic conditions to react with phosphoric acid ions present in the waste water to produce an insoluble compound or compounds of iron and phosphate ions.

2. A process according to claim 1, wherein the concentration of suspended solids in the mixed liquor of waste water and activated sludge is in the range of 3,000 to 6,000 mg/l.

3. A process according to claim 1 or 2, wherein the sulfate reducing bacteria are obtained from the soil of paddy fields.

**Patentansprüche**

1. Verfahren für die Abwasserbehandlung zur Entfernung von Phosphor und gegebenenfalls Stickstoff aus Abwasser, wobei das Verfahren ein solches vom aktivierten Schlammtyp oder Biofiltertyp ist und unter aeroben Bedingungen und dann unter anaeroben Bedingungen in einem Behandlungstank arbeitet, der Abwasser einschließlich von Phosphationen, aktivierten Schlamm einschließlich von Bakterien und einen in das Abwasser eingetauchten Eisenkontakt oder eingetauchte Eisenkontakte aufweist, wobei Korrosion zum Auswaschen von Eisenionen aus dem Eisenkontakt oder den Eisenkontakten bewirkt wird und eluierte Eisenionen mit Phosphationen unter Bildung von unlöslichen Eisenphosphaten reagieren, dadurch gekennzeichnet, daß das Verfahren die folgenden Stufen aufweist:
   - Zugabe von akklimatisierten, sulfatreduzierenden Bakterien zum aktivierten Schlamm,
   - Aufrechterhaltung des Verhältnisses der Phosphatbelastung pro Tag im Abwasser zur gesamten Oberfläche des Eisenkontaktes oder der Eisenkontakte im Bereich von 0,3 bis 1,0 g/m²/Tag,
   - Hervorrufen eines bewegenden Stroms des Abwassers, der über die Oberfläche des Eisenkontaktes oder der Eisenkontakte mit einer Geschwindigkeit von 10 bis 20 cm/sec fließt,
   - Betreiben des Behandlungstanks unter aeroben Bedingungen, während eine Konzentration an gelöstem Sauerstoff von 1 bis 3.2 mg/l aufrechterhalten wird und Aufrechterhaltung des Oxidations-Reduktionspotentials der erhaltenen Sauerstoffkonzentrationszelle im Bereich von -200 bis -400 mV und dadurch Herbeiführung der elektrochemischen Korrosion des Eisens und des Auswaschens von Eisenionen aus dem Eisenkontakt oder den Eisenkontakten, und dann
   - Betrieb des Behandlungstanks unter anaeroben Bedingungen und so Aufrechterhaltung der Konzentration an gelöstem Sauerstoff bei 0 mg/l im Tank, um so zu bewirken, daß $10^5$ bis $10^6$ Zellen/ml an sulfatreduzierenden Bakterien eine Mikroorganismenkorrosion der Oberfläche des Eisenkontakts oder der Eisenkontakte und dadurch das Auswaschen von Eisenionen aus dem Eisenkontakt oder den Eisenkontakten hervorrufen, und
   - Reagierenlassen der eluierten Eisenionen unter sowohl den aeroben als auch den anaeroben Bedingungen mit Phoshporsäureionen, die im Abwasser vorliegen, um eine unlösliche Verbindung oder unlösliche Verbindungen von Eisen- und Phosphationen zu erzeugen.

2. Verfahren nach Anspruch 1, dadurch gekennzeichnet, daß die Konzentration an suspendierten Feststoffen in der Flüssigkeitsmischung von Abwasser und aktiviertem Schlamm im Bereich von 3000 bis 6000 mg/l liegt.

3. Verfahren nach Anspruch 1 oder 2, dadurch gekennzeichnet, daß die sulfatreduzierenden Bakterien aus dem Boden von Reisfeldern erhalten sind.

**Revendications**

1. Procédé de traitement des eaux usées, destiné à éliminer des eaux usées le phosphore et éventuellement l'azote, du type à boues activées ou du type à biofiltre, fonctionnant dans des conditions aérobies puis dans des conditions anaérobies dans un bassin de traitement contenant des eaux usées qui comprennent des ions phosphates, des boues activées contenant des bactéries, un ou plusieurs contacteurs de fer immergés dans les eaux usées, une corrosion étant réalisée pour extraire par élution les ions fer du ou des contacteurs de fer, les ions fer élués réagissant avec les ions phosphate pour former des phosphates de fer insolubles, caractérisé en ce qu'il comprend les étapes consistant :
   - à ajouter aux boues activées des bactéries acclimatées réductrices des sulfates,
   - à maintenir entre 0,3 et 1,0 g/m²j le rapport de la charge journalière de phosphore dans les eaux usées à l'aire totaledu ou des contacteurs de fer,
   - à faire en sorte qu'un courant d'eaux usées agitées passe sur la surface du ou des contacteurs de fer à une vitesse de 10 à 20 cm/s,
   - à exploiter le bassin de traitement dans des conditions aérobies tout en maintenant la concentration de l'oxygène dissous entre 1 et 3,2 mg/l et tout en maintenant le potentiel d'oxydo-réduction de la cellule de concentration d'oxygène ainsi obtenue entre -200 et -400 mV, de façon à provoquer une corrosion électrochimique du fer et l'élution des ions fer à partir du ou des contacteurs de fer, puis
   - à exploiter le bassin de traitement dans des conditions anaérobies, en maintenant la concentration de l'oxygène dissous à 0 mg/l dans le bassin et en faisant en sorte que $10^5$ à $10^6$ cellules/ml de bactéries réductrices des sulfates provoquent une corrosion, par les microorganismes, de la surface du ou des contacteurs de fer, avec en conséquence une élution des ions fer à partir du ou des contacteurs de fer, et
   - à permettre aux ions fer élués tant dans les conditions aérobies que dans les conditions anaérobies de réagir avec les ions acide phosphorique présents dans les eaux usées, pour produire un ou plusieurs composés insolubles d'ions fer et phosphate.

2. Procédé selon la revendication 1, dans lequel la concentration des solides en suspension dans la liqueur mixte constituée des eaux usées et des boues activées est comprise entre 3000 et 6000 mg/l.

3. Procédé selon la revendication 1 ou 2, dans lequel les bactéries réductrices des sulfates sont obtenues à partir du sol des rizières.

# FIG.1

# FIG.2

## FIG.3

INFLOW OF
WASTE WATER

DISCHARGE
OF TREATED
WATER

19  21  ▽ HWL

18

20  3  LWL

22

2  23

## FIG.4

AGITATION
STEP

AGITATION
STEP

SETTLING
STEP

DISCHARGING
STEP

AERATION
STEP

AERATION
STEP

# FIG.5

PHOSPHORUS REMOVAL RATE (%)

LOAD OF PHOSPHORUS WITH RESPECT TO THE SURFACE AREA OF THE STEEL CONTACT MATERIAL ($g/m^2 \cdot DAY$)